Europäisches Patentamt

European Patent Office

Office européen des brevets

(11) Veröffentlichungsnummer : **0 132 546**
**B1**

(12) **EUROPÄISCHE PATENTSCHRIFT**

(45) Veröffentlichungstag der Patentschrift :
27.05.87

(51) Int. Cl.⁴ : **B 01 D 13/00**, C 02 F 1/44

(21) Anmeldenummer : 84106268.0

(22) Anmeldetag : 01.06.84

(54) Vorrichtung zum Filtern und Trennen von Strömungsmedien, insbesondere zur Wasserentsalzung und Wasserreinigung durch Umkehrosmose und Ultrafiltration.

(30) Priorität : 29.07.83 DE 3327431

(43) Veröffentlichungstag der Anmeldung :
13.02.85 Patentblatt 85/07

(45) Bekanntmachung des Hinweises auf die Patenterteilung : 27.05.87 Patentblatt 87/22

(84) Benannte Vertragsstaaten :
CH DE FR GB IT LI LU NL SE

(56) Entgegenhaltungen :
FR-A- 2 021 564
FR-A- 2 207 747
FR-A- 2 216 000
NL-A- 7 515 261
MACHINE DESIGN, Seals Reference Issue, Band 39, Nr. 6, 09. März 1967, Seiten 65-67, Penton Publishing Comp., B.J. Hummel (Editor), Kapitel 11, Cleveland, Ohio, US; M.H. EVERETT: "Static o-ring seals"
Die Akte enthält technische Angaben, die nach dem Eingang der Anmeldung eingereicht wurden und die nicht in dieser Patentschrift enthalten sind.

(73) Patentinhaber : **Mohn, Jürgen**
**Rahewinkel 21**
**D-2000 Hamburg 74 (DE)**

**Heine, Wilhelm**
**Knickberg 1b**
**D-2100 Hamburg 90 (DE)**

(72) Erfinder : **Mohn, Jürgen**
**Rahewinkel 21**
**D-2000 Hamburg 74 (DE)**
Erfinder : **Heine, Wilhelm**
**Knickberg 1b**
**D-2100 Hamburg 90 (DE)**

(74) Vertreter : **Schöning, Hans-Werner, Dipl.-Ing.**
**RECHTSANWÄLTE Dr. Harmsen, Dr. Utescher Dipl.-Chem Harmsen, Bartholatus Dr. Schaeffer, Dr. Fricke PATENTANWÄLTE Dr. Siewers, Dipl.-Ing. Schöning**
**Adenauerallee 28**
**D-2000 Hamburg 1 (DE)**

EP 0 132 546 B1

## Beschreibung

Die Erfindung betrifft eine Vorrichtung. zum Filtern und Trennen von Strömungsmedien, insbesondere zur Wasserentsalzung oder Wasserreinigung durch Umkehrosmose oder Ultrafiltration mit einer Mehrzahl von in Reihe geschalteten, aufeinander gestapelten kreisscheibenförmigen Filterelementen, die jeweils aus einer tellerartigen Trägerplatte, einer tellerartigen Leitplatte und einer zwischen Trägerplatte und Leitplatte liegenden, mit Filterschicht hinterlegten Membrane bestehen, wobei an den Enden des Filterelementenstapels scheibenförmige Druckplatten vorgesehen sind, die den Filterelementenstapel mit einem die Mittelbohrungen der Filterelemente durchsetzenden Bolzen zusammenspannen.

Damit Filtervorrichtungen der vorgenannten Art, wie sie beispielsweise aus der US-A-3 847 818 bekannt geworden sind, wirtschaftlich betrieben werden können, kommt es darauf an, die in einem Gehäuse angeordneten Filterelemente leicht zugänglich unterzubringen, so daß sie schnell aus- und auch einbaubar sind. Im Idealfall sollte dafür gesorgt werden, daß abgesehen von den Strömungsmittelanschlüssen nur eine einzige Verbindung zu lösen ist, um an den gesamten Stapel von Filterelementen herankommen zu können. Für einen wirtschaftlichen Betrieb einer solchen Filtervorrichtung ist es aber auch erforderlich, daß sie mit relativ hohem Druck betrieben werden kann, woraus sich dann kritische Abdichtungsprobleme ergeben, wenn die gesamte Filtervorrichtung nur mit einem einzigen Spannbolzen zusammengehalten wird. Wenn man zur Verminderung der Abdichtungsschwierigkeiten einseitig geschlossene rohrförmige Gehäuse verwendet, werden diese Gehäuse sehr teuer, gleichgültig, ob man das geschlossene Gehäuseende in einteiliger Fertigung kuppelförmig ausbildet oder an diesem geschlossenen Ende auf einem Ringflansch einen Deckel aufspannt.

Aufgabe der vorliegenden Erfindung ist daher die Schaffung einer verbesserten Filtervorrichtung der einleitend genannten Art, die bei nur kleinem kostenmäßigen Aufwand eine Möglichkeit schafft, die gestapelten Filterelemente auszuwechseln, ohne daß dabei irgendwelche Dichtungsprobleme auftauchen.

Zur Lösung der vorgenannten Aufgabe wird erfindungsgemäß vorgeschlagen, als Außengehäuse für den Filterelementenstapel ein beidendig offenes Rohr zu verwenden, dessen Innendurchmesser gleich oder größer als der Stapeldurchmesser ist, wobei dann die den Stapel zusammenspannenden Druckplatten am Außenumfang Ringnuten enthalten, deren im wesentlichen radiale Seitenwände derart zu den Rohrenden hin schräggestellt sind, daß in den Nuten angeordnete Dichtungsringe bei innerem Überdruck radial und axial nach außen gegen die Rohrinnenwand gedrückt werden, während der Filterelementstapel in einem Zustand bei gleichem Innen- und Außendruck aus dem Rohr herausziehbar ist.

Die erfindungsgemäße Filtervorrichtung ist besonders einfach zu demontieren und wieder zu montieren, indem man die Spannbolzenverbindung lockert. Im drucklosen Zustand kann der gesamte Filterelementenstapel aus dem Rohr herausgezogen werden. Bei einem Wiedereinbau in umgekehrter Richtung sorgt der im Inneren der Filtervorrichtung zu erzeugende Druck dafür, daß die in den Druckplatten vorhandenen Ringdichtungen radial nach außen gedrückt werden, wobei der Dichtdruck umso größer ist, je größer der abzusichernde Innendruck im Gerätegehäuse ist.

Weitere Einzelheiten und Merkmale der Erfindung ergeben sich aus den abhängigen Ansprüchen.

Nachfolgend wird anhand der beigefügten Zeichnungen eine bevorzugte Ausführungsform der Erfindung näher erläutert.

In den Zeichnungen zeigen :

Figur 1 einen axialen Teilschnitt durch das Vorderende einer erfindungsgemässen Vorrichtung zur Wasserentsalzung durch Umkehrosmose,

Figur 2 das Hinterende der in Fig. 1 dargestellten Vorrichtung, deren Einzelteile in den Fig. 4 bis 12 im verkleinerten Maßstab dargestellt sind,

Figur 3 eine Draufsicht auf den Schraubverschluß des zentralen Spannbolzens,

Figur 4 eine Draufsicht auf die vordere Druckplatte,

Figur 5 einen Querschnitt gemäß der Schnittlinie V-V der Fig. 4,

Figur 6 eine Draufsicht auf eine Leitplatte eines Filterelementes,

Figur 7 einen Querschnitt gemäß der Schnittlinie VII-VII der Fig. 6,

Figur 8 eine Draufsicht auf eine Membranträgerplatte,

Figur 9 einen Querschnitt gemäß der Schnittlinie IX-IX der Fig. 8,

Figur 10 eine Draufsicht auf eine Schub- und Verteilerplatte,

Figur 11 einen Querschnitt gemäß der Schnittlinie XI-XI der Fig. 10,

Figur 12 eine Draufsicht auf die hintere Druckplatte und

Figur 13 einen Querschnitt gemäß der Schnittlinie XIII-XIII der Fig. 12.

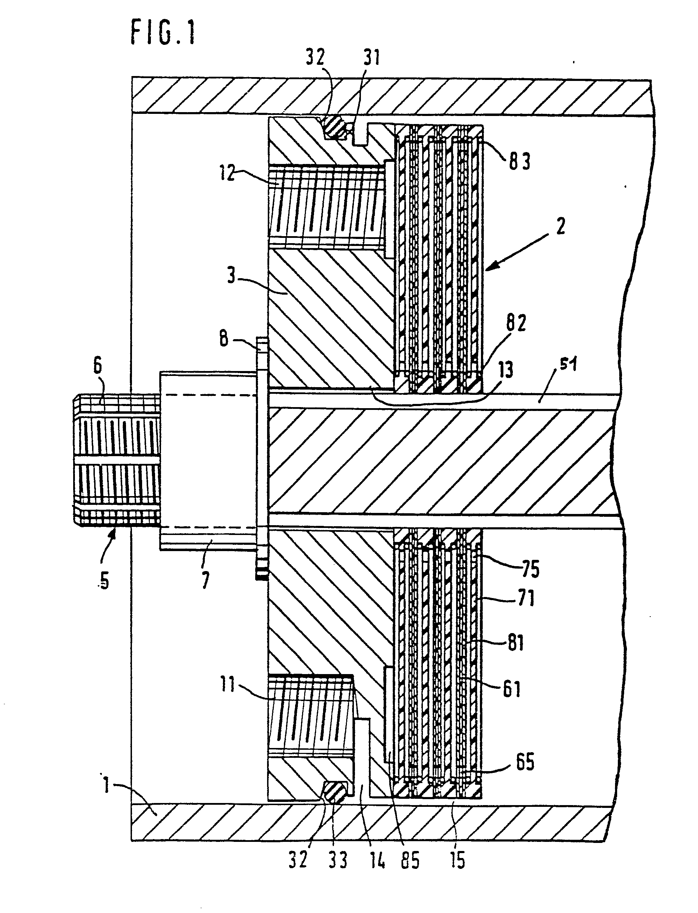

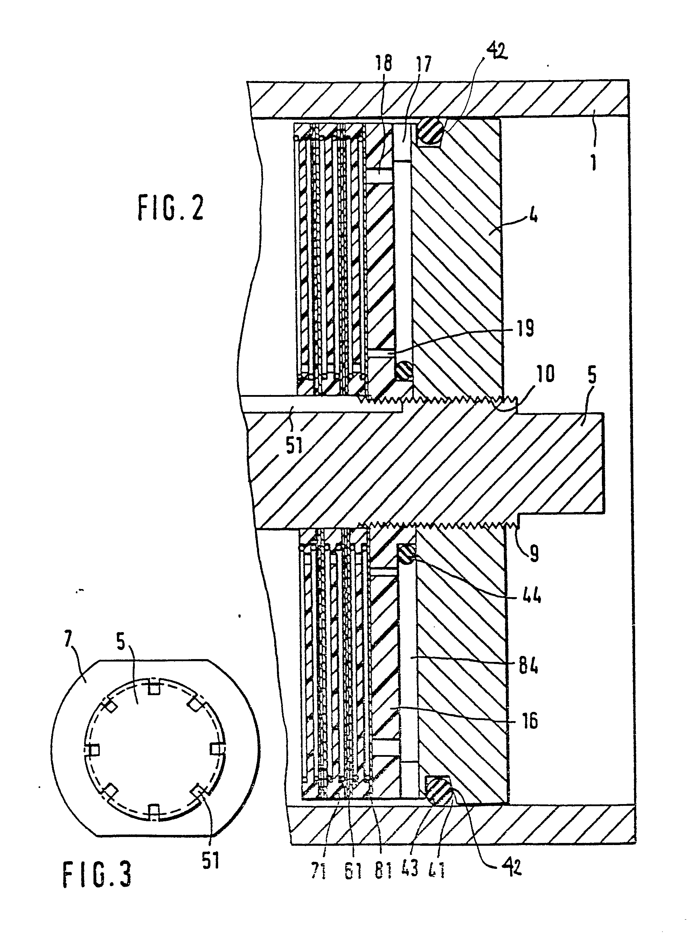

Die in den Fig. 1 und 2 etwa in normaler Größe dargestellte erfindungsgemäße Vorrichtung zum Filtern und Trennen von Strömungsmedien verwendet als Außengehäuse ein beidendig offenes Rohr 1, welches beispielsweise etwa einen Meter lang sein kann. In diesem Gehäuserohr befindet sich ein Filterelementenstapel, dessen einzelne Bauelemente nachfolgend noch näher beschrieben werden. Dieser Filterelementenstapel 2 liegt innerhalb des Rohres 1 zwischen einer vorderen Druckplatte 3 und einer hinteren Druckplatte 4. Über die volle Länge der Vorrichtung erstreckt sich ein mittlerer Spannbolzen 5, der mit einem Außengewinde 9 in eine Gewindebohrung 10 der hinteren Druckplatte eingesetzt ist. Dieser Bolzen 5 durchsetzt sämtliche Bauteile des Filterelementenstapels und auch eine Mittelbohrung 13 der vorderen Druckplatte. Der Stapel 2 wird dadurch zusammengespannt, daß die vordere Druckplatte 3 mit einer auf das Außengewinde 6 aufgeschraubten Mutter 7 und einer Unterlegscheibe 8 beaufschlagt wird.

Sämtliche Anschlüsse der Vorrichtung befinden sich in der vorderen Druckplatte 3, nämlich ein Zuflußanschluß 11 für das Rohwasser, ein Abflußanschluß 12 für die Sole und der Permeatabfluß. Das Permeat verläßt die Vorrichtung in nachfolgend noch näher zu beschreibender Weise über den von achsparallelen Nuten 51 gebildeten Kanälen zwischen der Mittelbohrung 13 der vorderen Druckplatte 3 und dem Spannbolzen 5 (vgl. Fig. 3).

Der Zuflußanschluß 11 kann eine Gewindebohrung sein, wie es in Fig. 1 angedeutet ist. Diese achsparallele Gewindebohrung 11 steht mit einer Ringnut 14 in Verbindung, die am Außenumfang der Druckplatte 3 vorgesehen ist. In Strömungsrichtung hinter der Ringnut 14 hat die Druckplatte 3 einen verminderten Durchmesser, der im wesentlichen übereinstimmt mit dem Außendurchmesser des Filterelementenstapels 2, der etwas geringer ist als der Innendurchmesser des Rohres 1. Auf diese Weise kann das am Anschluß 11 zugeführte Rohwasser über einen den gesamten Filterelementenstapel umgebenden zylinderförmigen Spalt 15 das in Fig. 2 dargestellte hintere Ende der Vorrichtung erreichen.

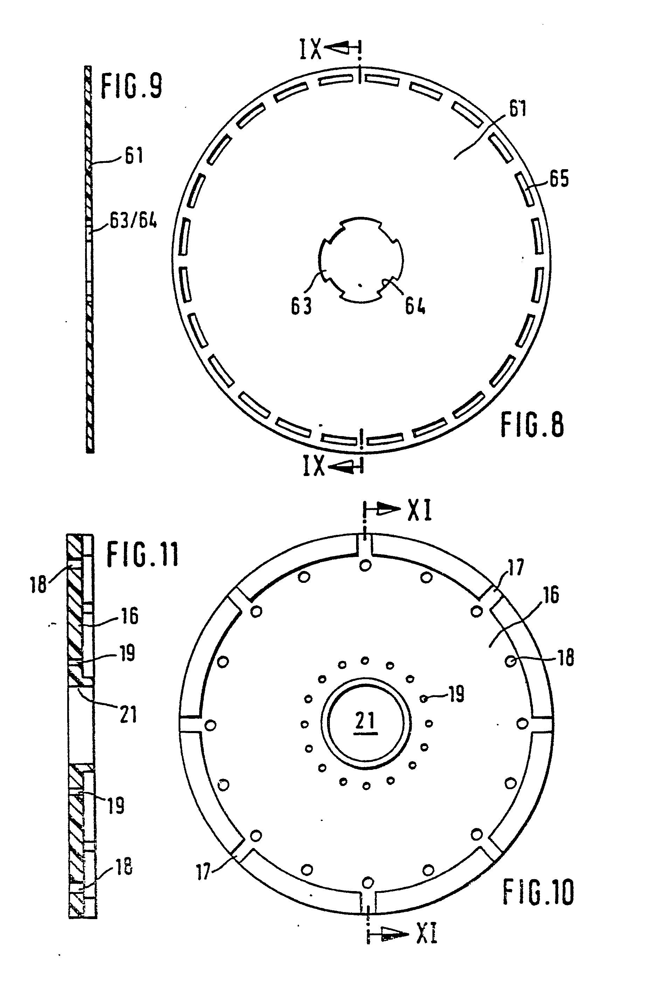

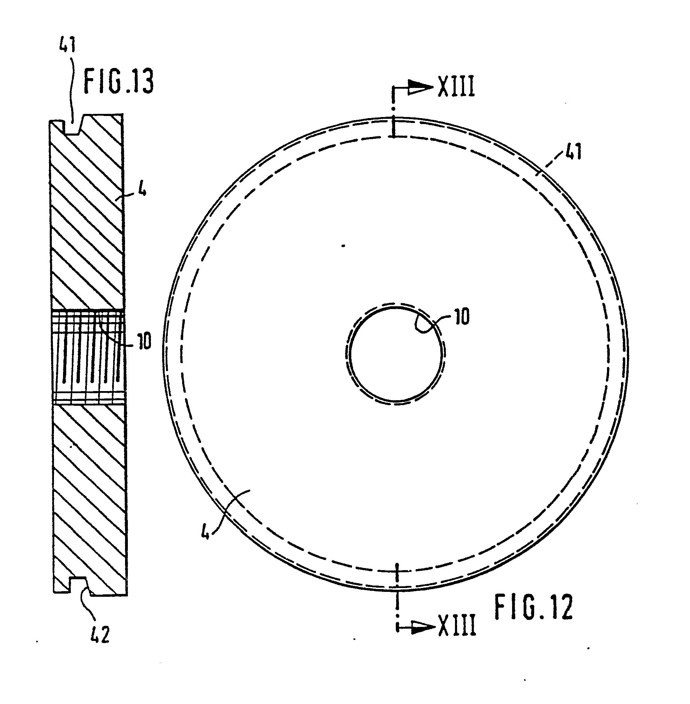

Am Hinterende der Vorrichtung befindet sich vor der hinteren Druckplatte 4 eine mit Mittelbohrung 21 versehene Schub- oder Verteilerplatte 16, die in den Fig. 10 und 11 dargestellt ist. Diese Schubplatte 16, welche tellerförmig ausgebildet ist und sich an der Druckplatte 4 abstützt, weist radial gerichtete Bohrungen 17 und achsparallele Bohrungen 18 auf. Auf diese Weise kann das über den zylinderförmigen Spalt 15 eintreffende Rohwasser über die hintere Stirnfläche des Filterelementenstapels verteilt werden, um dann die einzelnen Filterelemente des Stapels nacheinander zu durchströmen. Eine zwischen Verteilerplatte 16 und Druckplatte 3 angeordnete Dichtung 44 verhindert, daß das zuströmende Rohwasser an den Außenmantel des Spannbolzens herangelangen kann, da in diesem Bereich das Permeat abgeführt werden soll.

Die einzelnen Filterelemente des Filterelementenstapels bestehen jeweils aus einer Trägerplatte 61, einer Leitplatte 71 und zwischen diesen beiden Platten 61 und 71 eingeschlossenen Membranen 81.

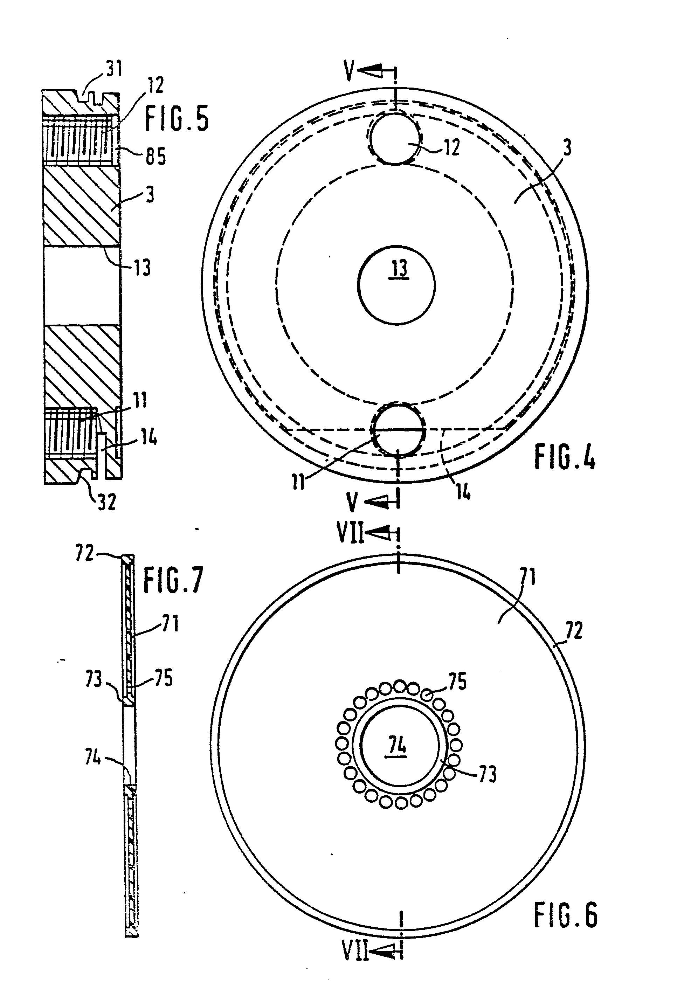

Im Membranstapel liegen jeweils hintereinander: eine Leitplatte 71, eine Membrane 81, eine Trägerplatte 61, eine Membrane 81, eine Leitplatte 71, eine Membrane 81 usw. Wie Fig. 6 und 7 zeigen, besteht die dünnwandige Leitplatte 71 aus einer Ringscheibe, die in der Umgebung ihrer Mittelbohrung 74 mit einem Ringbund 73 und auf dem Außenumfang mit einem Ringbund 72 versehen ist. In der Nähe der Mittelöffnung befindet sich in der Leitplatte 71 eine Reihe von axialen Durchtrittsöffnungen 75.

Die in Fig. 8 und 9 dargestellte Trägerplatte 61 ist ebenfalls sehr dünnwandig. Sie hat auf ihrem Außenumfang eine Reihe von axialen Durchtrittsöffnungen 65 und eine Mittelbohrung 64, die genau wie die Mittelbohrung 74 der Leitscheibe 71 an dem Außenumfang des Spannbolzens 5 anliegen kann. Die Trägerplatte 61 ist auf beiden Seiten mit einer Membrane 81 belegt. Zwischen der Oberfläche der Trägerplatte 61 und der Unterseite der Membrane 81 kann in an sich bekannter Weise eine dünne Gewebeschicht angeordnet sein, damit das durch die Membrane hindurchgetretene Permeat den Weg zum Permeatauslaß leichter finden kann. Die Membranen sind mit ihrem Umfang vorzugsweise mit dem Umfang der Trägerplatte 61 innethalb der axialen Durchtrittsöffnungen 65 verklebt, so daß hier in Verbindung mit dem Ringbund 72 der Leitplatte 71 ein dichter Abschluß entsteht. Die Mittelbohrung 63 der Trägerplatte ist nicht kreisrund, sondern enthält Erweiterungen, über die das zwischen Membran- und Trägerplatte abgeschiedene Permeat die Permeatableitnuten 51 des Spannbolzens 5 erreichen kann.

Der Filterelementenstapel wird wie folgt durchflossen:

Das über den zylinderförmigen Spalt 15 zum rechten Ende der Filtervorrichtung geführte Rohwasser erreicht über die radialen Bohrungen 17 der Verteilerplatte 16 den Ringraum 84 zwischen hinterer Druckplatte 4 und Verteilerplatte 16. Durch die axialen Bohrungen 18 und 19 beaufschlagt das Rohwasser großflächig die an der gegenüberliegenden Seite der Verteilerplatte 16 befindliche Membran. Das durch die Membran 81 hindurchgetretene Permeat kann, da am Außenumfang eine Abdichtung vorhanden ist, lediglich zur Mitte d. h. zum Umfang des Spannbolzens 5 weitergeleitet werden. In der Mantelfläche des Spannbolzens 5 wird das Permeat über die Permeatableitnuten 51 zum linken Ende (Fig. 1) der Vorrichtung geführt, wo es an der Stirnfläche des Bolzens 5 außerhalb der Vorrichtung austreten und aufgefangen werden kann. Das durch den Permeatverlust angereicherte Rohwasser strömt dann vom rechten Ende der Vorrichtung zum linken Ende, indem es jeweils nach Passieren der Bohrungen 75 der Leitplatte 71 radial nach außen und nach Passieren ·der axialen Bohrungen oder Öffnungen 65 der Trennplatte radial nach innen fließt, bis hinter der Leitplatte 71 der Ringraum 85 erreicht ist, der mit dm Abflußanschluß 12 in Verbindung steht.

Da das sich am Umfang des Spannbolzens 5 sammelnde Permeat immer mehr wird, während das Rohwasser von rechts nach links die Vorrichtung gemäß Fig. 1 und 2 durchströmt, bedarf es ständig größer werdender Abfuhrkanäle. Zu diesem Zwecke sind die in Fig. 3 dargestellten vier Paare von Permeatabflußnuten 51 nicht sämtlich bis zum rechten Hinterende des Bolzens 5 geführt. Es kann beispielsweise daran gedacht werden, daß sich ein Nutenpaar 51 über die gesamte Wirkungslänge des Bolzens 5 erstreckt. Ein weiteres Paar der Nuten 51 mag sich dann über 75 %, bzw. 50 %, bzw. 25 % der Wirkungslänge des Bolzens 5 erstrecken. Eine andere Möglichkeit besteht darin, einen einzigen Permeatableitkanal vorzusehen und bei diesem den Querschnitt vom rechten zum linken Ende stetig größer zu machen. Die Verwendung von mehreren Paaren von sich über unterschiedliche Längen des Modulblockes erstreckenden Permeatableitnuten verdient den Vorzug, weil hierdurch die Möglichkeit gegeben wird, Fehlerstellen im Modulblock zu lokalisieren. Wenn man feststellt, daß bei einzelnen Permeatabflußnuten reines Permeat anzutreffen ist, ergibt sich hieraus zwingend, daß in einem von diesen Nuten überdeckten Bereich des Modulblockes keine Störung vorliegt. Andererseits zeigt sich immer dann an einzelnen Nuten eine Verunreinigung des Permeats durch Rohwasser, wenn in dem von dieser Nute überdeckten Bereich des Modulblockes Undichtigkeiten bezüglich der Rohwasserführung vorhanden sind.

Wie schon zuvor ausgeführt, erfolgt die Abdichtung zwischen den Membraneinheiten und dem Spannbolzen bzw. zum Permeatabflußkanal durch die zwischengelegten O-Ringe 82. Eine Abdichtung am Außenumfang gegenüber dem zufliessenden Rohwasser im zylinderförmigen Spalt 15 und den Rohwasser- bzw. Solekanälen zwischen den Membraneinheiten könnten ebenfalls vorgesehen sein. Im allgemeinen ist dies jedoch nicht erforderlich, wenn man die Membranen auf den sie abstützenden Platten anklebt. Am Außenende des Modulblocks (Fig. 2 rechts) können maximal Differenzdrücke von beispielsweise 5 bar auftreten. Wenn hier tatsächlich eine Undichtigkeit auftritt, hat dies lediglich zur Folge, daß ein Teil des noch nicht verarbeiteten Rohwassers in die hoch aufkonzentrierte Sole gelangt und damit abströmt. Die Funktionsfähigkeit des Modulblockes wird aber nicht beeinträchtigt. Am inneren Ende des Modulblocks (Fig. 1 links) ergeben sich praktisch keine Druckdifferenzen.

Der vorstehend beschriebene Modulblock bzw. die Filtriervorrichtung kann vor allem dadurch außerordentlich preiswert hergestellt werden, weil sie mit einem einzigen Spannbolzen 5 und einer Gewindemutter 7 zusammengehalten wird. Diese Gewindeverbindung zwischen den Druckplatten 3 und 4 und dem Spannbolzen 5 sorgt außerdem noch in Verbindung mit dem im Betrieb innerhalb der Vorrichtung herrschenden Druck für eine einwandfreie Gehäuseabdichtung, die umso besser und sicherer wird, je höher der Gehäuseinnendruck wird. Wie die Fig. 1 und 2 zeigen, befinden sich am Umfang der Druckplatten 3 und 4 Ringnuten 31 und 41, in welche als Dichtungen O-Ringe 33 bzw. 43 eingelegt sind. Das Besondere dieser Umfangsdichtung liegt darin, daß die Ringnuten 31 und 41 an den zur Rohröffnung zeigenden Seite Seitenwände 32 bzw. 42 aufweisen, die nach außen divergieren. Diese schräggestellten Seitenwände 32 und 42 haben zur Folge, daß die Dichtungsringe 33 und 43 bei innerem Druck in der Filtervorrichtung nicht nur axial nach außen gedrückt, sondern auch noch radial aufgeweitet werden. Die Dichtungsringe 33 und 43 werden sich daher in den spitzwinkligen Raum hineinlegen, der zwischen der Innenwand des Rohres 1 und der schrägen Nutenseitenwand 32 bzw. 42 entsteht.

Erfindungsgemäß ist somit auf kleinstem Raum ein äußerst betriebssicherer Modulblock entstanden, dessen Filterelemente durch Lösen einer einzigen Gewindemutter ausgebaut werden können und dessen Gehäuse in besonders preisgünstiger Weise aus einem handelsüblichen beidseitig offenen druckfesten Rohr besteht, indem mit einfachsten Mitteln eine sichere Abdichtung erzielbar ist.

Wenn man beispielsweise einen Modulblock mit einer Länge von 1 m und einem Innendurchmesser von 20 cm aufbaut, kann man je nach der Dicke der Membranelemente zwischen 2 und 4 mm 200 bis 400 Platten unterbringen entsprechend einer Gesamtwirkungsfläche von 5m² oder mehr.

**Patentansprüche**

1. Vorrichtung zum Filtern und Trennen von Strömungsmedien, insbesondere zur Wasserentsalzung oder Wasserreinigung durch Umkehrosmose oder Ultrafiltration mit einer Mehrzahl von in Reihe geschalteten, aufeinander gestapelten kreisscheibenförmigen Filterelementen, die jeweils aus einer tellerartigen Trägerplatte (61), einer tellerartigen Leitplatte (71) und einer zwischen Trägerplatte und Leitplatte liegenden, mit Filterschicht hinterlegten Membrane (81) bestehen, wobei an den Enden des Filterelementenstapels (2) scheibenförmige Druckplatten vorgesehen sind, die den Filterelementenstapel (2) mit einem die Mittelbohrungen der Filterelemente durchsetzenden Bolzen (5) zusammenspannen, dadurch gekennzeichnet, daß für den Filterelementenstapel (2) als Außengehäuse ein beidendig offenes Rohr (1) vorgesehen ist, dessen Innendurchmesser gleich oder größer als der Stapeldurchmesser ist, und daß die den Stapel (2) zusammenspannenden Druckplatten (3, 4) am Außenumfang Ringnuten (31, 41) enthalten, deren im wesentlichen radiale Seitenwände (32, 42) derart zu den Rohrenden hin schräggestellt sind, daß in den Nuten (31, 41) angeordnete Dichtungsringe (33, 43) bei innerem Überdruck radial und axial nach außen gegen die Rohrinnenwand gedrückt werden, während der Filterelementenstapel (2) in einem Zustand bei gleichem Innen- und Außendruck aus dem Rohr (1) herausziehbar ist.

2. Vorrichtung nach Anspruch 1 dadurch gekennzeichnet, daß der zentrale Spannbolzen (5) zwischen den Druckplatten (3, 4) in seiner Mantelfläche achsparallele Permeatableitnuten (51) aufweist, die außerhalb des Filterstapels (2) mit einer Permeatabflußleitung verbunden sind.

3. Vorrichtung nach Anspruch 2 dadurch gekennzeichnet, daß die Ableitnuten (51) zwischen dem zuflußseitigen und abflußseitigen Ende des Filterelementenstapels (2) mit stetig steigendem Querschnitt ausgebildet sind.

4. Vorrichtung nach Anspruch 2 dadurch gekennzeichnet, daß die Permeatableitnuten (51) sich vom zuflußseitigen Ende des Filterelementenstapels aus gesehen entsprechend einer regelmäßigen Abstufung unterschiedlich weit in Richtung zum abflußseitigen Ende des Filterelementenstapels (2) erstrecken.

5. Vorrichtung nach Anspruch 4 dadurch gekennzeichnet, daß der Zuflußanschluß (11) und der Abflußanschluß (12) in der gleichen Druckplatte (3) vorgesehen sind und daß zum Verbinden eines der in der Druckplatte (3) vorgesehenen Anschlüsse (11) mit dem abgelegenen Ende des Filterelementenstapels (2) zwischen dem Außenumfang des Filterelementenstapels (2) und der Innenwand des Gehäuserohres (1) ein zylinderförmiger Ringspalt (15) ausgebildet ist.

6. Vorrichtung nach Anspruch 5 dadurch gekennzeichnet, daß zum äußeren Abdichten des Filterelementenstapels (2) gegenüber dem zylinderförmigen Spalt (15) in den Filterelementen die Außenränder der Membranen mit ihren Trägerplatten verklebt sind.

7. Vorrichtung nach Anspruch 1 bis 6 dadurch gekennzeichnet, daß die Filterelemente (61, 71, 81) mit axialen Durchtrittsöffnungen (65, 75) und wechselnd am innen und äußeren Umfang vorgesehenen Dichtungen (82, 83) so zusammengeschaltet sind, daß die Membranen der Filterelemente in radialer Richtung wechselnd von innen nach außen und danach von außen nach innen überströmt werden.

## Claims

1. An apparatus for filtering and separating flowing media, particularly for the demineralisation of water or purification of filter elements in the form of circular discs which are connected in series and stacked together and which each consist of a disc-like supporting plate (61), a disc-like baffle-plate (71) and a diaphragm (81) situated between supporting plate and baffle-plate and backed with a filter layer, disc-shaped pressure plates being provided at the ends of the stack of filter elements (2) and stressing the stack of filter elements (2) together with a bolt (5) passing through the central bores in the filter elements, characterised in that a tube (1) is provided as an outer housing for the stack of filter elements (2) which is open at both ends and the internal diameter of which is equal to or larger than the diameter of the stack ; and the pressure plates (3,4) stressing the stack (2) together comprise, at the outer circumference, annular grooves (31, 41), of which the substantially radial side walls (32, 42) are inclined towards the ends of the tube in such a manner that sealing rings (33, 43) disposed in the grooves (31, 41) are urged radially and axially outwards towards the inner wall of the tube in the event of internal excess pressure, while the stack of filter elements (2) can be withdrawn from the tube (1) in a state in which internal and external pressure are equal.

2. An apparatus as claimed in Claim 1, characterised in that the central tension bolt (5) between the pressure plates (3, 4) comprises, in its peripheral surface, permeate offtake grooves (51) parallel to the axis which are connected to a permeate discharge pipe outside the filter stack (2).

3. An apparatus as claimed in Claim 2, characterised in that the offtake grooves (51) are constructed with a cross-section increasing continuously between the inflow and outflow end of the stack of filter elements (2).

4. An apparatus as claimed in Claim 2, characterised in that the permeate offtake grooves (51), seen from the inflow end of the stack of filter elements, extend to different distances in the direction of the outflow end of the stack of filter elements (2), in accordance with a regular graduation.

5. An apparatus as claimed in Claim 4, characterised in that the inflow connection (11) and the outflow connection (12) are provided in the same pressure plate (3) and that, in order to connect one of the connections (11) provided in the pressure plate (3) to the remote end of the stack of filter elements (2), a cylindrical annular gap (15) is formed between the outer circumference of the stack of filter elements (2) and the inner wall of the housing tube (1).

6. An apparatus as claimed in Claim 5, characterised in that the outer edges of the diaphragms are stuck to their supporting plates in the filter elements in order to seal off the stack of filter elements (2) at the outside from the cylindrical gap (15).

7. An apparatus as claimed in Claims 1 to 6, characterised in that the filter elements (61,71,81) are so interconnected with axial passages (65, 75) and seals (82, 83) provided alternately at the inner and outer circumference that the diaphragms of the filter elements are flowed over in the radial direction alternately from the inside outwards and then from the outside inwards.

## Revendications

1. Dispositif pour filtrer et séparer des milieux en écoulement, notamment pour un dessalement d'eau ou une épuration d'eau par osmose inverse ou par ultrafiltration, comportant une pluralité d'éléments de filtrage en forme de disques circulaires qui sont disposés en série, empilés l'un sur l'autre et qui se composent chacun d'une plaque portante (61) en forme de plateau, d'une plaque directrice (71) en forme de plateau et d'une membrane (81) placée entre la plaque portante et la plaque directrice et en arrière de laquelle est disposée une couche de filtrage, des plaques de pression en forme de disques étant prévues aux extrémités de la pile d'éléments de filtrage (2) afin de permettre le blocage de la pile d'éléments de filtrage (2) au moyen d'une broche (5) passant dans les trous centraux des éléments de filtrage, caractérisé en ce qu'il est prévu pour la pile d'éléments de filtrage (2), comme carter extérieur, un tube (1) ouvert aux deux extrémités et dont le diamètre intérieur est égal ou supérieur au diamètre de la pile, et en ce que les plaques de pression (3, 4) assurant le blocage de la pile (2) comportent sur leur périphérie extérieure des rainures annulaires (31, 41) dont des parois latérales sensiblement radiales (32, 42) sont inclinées vers les extrémités du tube de telle sorte que des bagues d'étanchéité (33, 43) disposées dans les rainures (31, 41) soient poussées, sous l'effet d'une pression interne, radialement et axialement vers l'extérieur contre la paroi intérieure du tube, tandis que la pile d'éléments de filtrage (2) peut être sortie du tube (1) dans une condition d'égalité entre la pression interne et la pression externe.

2. Dispositif selon la revendication 1, caractérisé en ce que la broche centrale de blocage (5) comporte, entre les plaques de pression (3, 4), dans sa surface périphérique des rainures d'évacuation de perméat (51) parallèles à l'axe et qui sont reliées, à l'extérieur de la pile d'éléments de filtrage (2), avec un conduit de décharge de perméat.

3. Dispositif selon la revendication 2, caractérisé en ce que les rainures d'évacuation de perméat (51) sont pourvues d'une section constamment croissante entre l'extrémité d'entrée et l'extrémité de sortie de la pile d'éléments de filtrage (2).

4. Dispositif selon la revendication 2, caractérisé en ce que les rainures d'évacuation de perméat (51) s'étendent, à partir de l'extrémité d'entrée d'écoulement de la pile d'éléments de filtrage, sur des distances différentes et échelonnées régulièrement en direction de l'extrémité de décharge d'écoulement de la pile d'éléments de filtrage (2).

5. Dispositif selon la revendication 4, caractérisé en ce que le raccord d'entrée d'écoulement (11) et le raccord de sortie d'écoulement (12) sont disposés dans la même plaque de pression (3) et en ce que, pour relier un des raccords (11) prévus dans la plaque de pression (3) avec l'extrémité arrière de la pile d'éléments de filtrage (2), il est prévu un intervalle annulaire (15) de forme cylindrique entre la périphérie extérieure de la pile d'éléments de filtrage (2) et la paroi intérieure du tube formant carter (1).

6. Dispositif selon la revendication 5, caractérisé en ce que, pour assurer l'étanchéité extérieure de la pile d'éléments de filtrage (2) par rapport à l'intervalle de forme cylindrique (15), les bords extérieurs des membranes prévues dans les éléments de filtrage sont collés sur leurs plaques portantes.

7. Dispositif selon les revendications 1 à 6, caractérisé en ce que les éléments de filtrage (61, 71, 81) sont pourvus de trous axiaux de traversée (65, 75) et de joints d'étanchéité (82, 83) disposés en alternance sur leurs périphéries intérieures et extérieures de telle sorte que les membranes des éléments de filtrage soient traversées dans une direction radiale alternativement de l'intérieur vers l'extérieur et ensuite de l'extérieur vers l'intérieur.

FIG.1

FIG.2

FIG.3

FIG.5

FIG.4

FIG.7

FIG.6

0 132 546

FIG.9

61

63/64

IX

FIG.8

61

65

63    64

XI

FIG.11

18

16

19

21

19

18

FIG.10

17

16

18

19

21

17

XI

4

FIG.13

41

4

10

42

FIG.12

XIII

41

10

4

XIII